# EUROPÄISCHE PATENTANMELDUNG

(11) **EP 1 724 609 A1**
(43) Veröffentlichungstag der Anmeldung: **22.11.2006**
(21) Anmeldenummer: 05104208.3
(22) Anmeldetag: 18.05.2005
(51) Int. Cl.: G01S 17/87, G01C 15/00, G01S 5/16

(54) **Verfahren zur Lagebestimmung einer Empfängereinheit**

(71) Anmelder: Leica Geosystems AG, 9435 Heerbrugg (CH)
(72) Erfinder: Benz, Paul, 9444 Diepoldsau (CH); Hinderling, Jürg, 9437 Marbach (CH)
(74) Vertreter: Harmann, Bernd-Günther

(57) **Zusammenfassung**

In einem Verfahren zur Lagebestimmung einer Empfängereinheit (5') wird durch wenigstens einen Strahlungsprojektor (1') modulierte Strahlung generiert und vermittels dieser eine Referenzpunktmenge projiziert, aus der in einem Erfassungsbereich (6') der Empfängereinheit (5') liegende Referenzpunkte (2") erfasst werden. Aus der Strahlung dieser Referenzpunkte (2") werden Lageinformationen, insbesondere Positions- und/oder Orientierungsinformationen, für die Empfängereinheit (5') abgeleitet.

## Beschreibung

Die Erfindung betrifft ein Verfahren zur Lagebestimmung einer Empfängereinheit nach dem Oberbegriff des Anspruchs 1, einen Strahlungsprojektor nach dem Oberbegriff des Anspruchs 11, eine Empfängereinheit nach dem Oberbegriff des Anspruchs 16, ein Computerprogrammprodukt und ein System zur Lagebestimmung.

In vielen geodätischen Anwendungen werden Verfahren und Systeme zur Lagebestimmung, d.h. zur Positions- und/oder Orientierungsbestimmung, eines verwendeten Instrumentes verwendet. Von einer mit einem solchen System bestimmten Position aus werden dann meist weitere Messungen durchgeführt, die mit der Position verknüpft sind und zumeist auch die Kenntnis der Orientierung des Messgerätes im Raum benötigen. Grundsätzlich kann dabei auch aus der Positionsbestimmung von zwei oder mehr Punkten auf die Orientierung des Instruments geschlossen werden. Für messtechnische Anwendungen sind zur eindeutigen Festlegung der absoluten Lage im Raum allgemein 6 Freiheitsgrade eines handhaltbaren Messgerätes, zumindest aber die Position und damit 3 Freiheitsgrade, zu bestimmen. Sind Zwangsbedingungen vorhanden, wie z.B. die Bewegung in einer definierten Ebene, so kann auch die Bestimmung von weniger Freiheitsgraden zur Festlegung von Position oder Orientierung genügen. Die Problemstellung beinhaltet somit die Bestimmung von Position und Orientierung als zwei grundsätzlich getrennt lösbare Aufgaben, die aber für viele Anwendungen verknüpft durchgeführt werden müssen. Im Regelfall werden somit sowohl Position als auch Orientierung eines zumeist handhaltbaren Messgerätes benötigt.

Ein Beispiel für Positionsbestimmungssysteme sind globale Positionierungssysteme wie z.B. GPS, GLONASS oder das im Aufbau befindliche europäische Galileo-System. Diese Systeme basieren auf dem möglichst ungestörten Empfang von Satellitensignalen, die allerdings auch durch Hindernisse abgeschattet und somit in ihrer Nutzbarkeit eingeschränkt werden können. Im unmittelbaren Nahbereich von Hindernissen kann aufgrund deren abschattender Wirkung der Empfang der Signale eingeschränkt oder vollständig unmöglich sein, so dass eine Positionsbestimmung mit diesem System nicht mehr möglich ist. Diese Einschränkungen betreffen insbesondere Messungen in Innenräumen von Gebäuden, in denen der Empfang einer zur Positionierung benötigten Anzahl von Satelliten im Regelfall auszuschliessen ist. Eine weitere Problematik besteht darin, dass globale Positionierungssysteme nicht immer die benötigte Genauigkeit der Positionsbestimmung bereitstellen bzw. einen erhöhten Aufwand erfordern, z.B. durch Nutzung einer Referenzstation oder längere Messzeiten.

Ein weiteres Beispiel stellt die Positionsbestimmung eines reflektortragenden Instrumentes mit einem Theodoliten bzw. Tachymeter dar. Durch eine Richtungs- und Entfernungsmessung mit dem Tachymeter zu dem geodätischen Instrument kann bei bekannter Position des Tachymeters auch die Position des Instruments bestimmt werden. In Verbindung mit einer automatisierten Zielerkennung und Zielverfolgung kann eine quasi-kontinuierliche Positionsbestimmung erreicht werden. Voraussetzung für die Messung ist hier die Sichtverbindung zwischen den beiden Komponenten. Erfolgt eine Unterbrechung dieser einzigen Verbindung, z.B. durch Bewuchs oder Gebäude im Sichtbereich, versagt die Art der Positionsbestimmung. Auch kann von einem motorisierten Tachymeter zeitgleich stets nur ein Instrument verfolgt werden, so dass z.B. bei vielen Fahrzeugen auf einer Baustelle auch eine grosse Anzahl von Theodoliten verwendet werden muss. Die Verwendung einer grossen Zahl von Theodoliten, die praktisch den gesamten zu vermessenden Bereich ohne Lücken im sichtbaren Bereich abdecken, verbietet sich meist aufgrund des Aufwandes an Gerät und Personal. Ausserdem bedingt eine solche Lösung eine hohe Komplexität sowie eine ständige Kommunikation zur Steuerung des Messvorganges.

Eine gebräuchliche Variante sind sogenannte Robotic Total Station Systems, welche vom Ziel- oder Lotstock her bedient werden. Solche Einmann-Betriebs-Vorrichtungen sind kommerziell erhältlich und werden von vielen Herstellern angeboten. Der automatisierte und in der Regel mit Videokamera unterstützte Theodolit dient als Fixstation, welche den handgetragenen Ziel- oder Lotstock optisch verfolgt. Die Koordinaten des Zielpunkts werden an der Zentralstation berechnet, an die Zieleinheit übertragen und dort zur Anzeige gebracht. Auch diese Vorrichtungen haben alle den Nachteil, dass direkte Sichtverbindung zum Ziel- oder Lotstock bestehen muss. Des weiteren hat das dynamische Verfolgen zusätzliche Nachteile, da bei grossen Beschleunigungen die Fixstation das Ziel verlieren kann.

Um die Aktualposition als gegenwärtigen Standort des Instruments unter allen Bedingungen mit der benötigten Genauigkeit zu ermöglichen, sind Verfahren bekannt, die auf einer Bestimmung der eigenen Position gegenüber hinsichtlich ihrer Position bekannten Objekten als Referenzobjekten bzw. Referenzpunkten beruhen. Ein Beispiel hierfür stellt das klassische Verfahren des Rückwärtsschnittes dar. Sollen nun Aktualpositionen für ein geodätisches Instrument bzw. ein dafür geeignetes Positionierungsgerät aus der Kenntnis von Referenzpunkten abgeleitet werden, so müssen die Referenzpunkte vorher festgelegt und mit hinreichender Genauigkeit vermessen werden. Hierfür werden zumeist spezielle Komponenten montiert, wobei entweder aktive Sender, wie z.B. Mikrowellensender, oder passive Systeme, beispielsweise Reflektoren verwendet werden.

Die Bestimmung der Aktualposition oder Aktualorientierung erfolgt durch eine Messung zu den Referenzpunkten und/oder weiteren Messungen, beispielsweise einer Neigungsmessung und damit gegenüber der Lotrechten oder Horizontalen, aus der Rückschlüsse über den eigenen Standort bzw. die Aktualposition oder die Aktualorientierung abgeleitet werden können. Grundsätzlich kann hierbei die Bestimmung von Position und/oder Orientierung absolut, d.h. durch eine isolierte Messung zu Punkten bekannter Position, oder relativ, d.h. unter Beobachtung der Veränderung gegenüber einer Nullage bekannter Position oder Orientierung erfolgen.

In vielen Fällen verfügt ein geodätisches Instrument nur über eine Fähigkeit zur Entfernungsmessung bzw. ist eine Messung von Winkeln nicht mit der benötigten Präzision oder Geschwindigkeit durchzuführen. In diesen Fällen muss die Positionsbestimmung allein durch Entfernungsmessungen durchgeführt werden. Hierzu werden die Entfernungen zu mehreren Punkten mit bekannter Position gemessen und mit bekannten Verfahren, wie sie beispielsweise auch in der Photogrammetrie verwendet werden, kann die Bestimmung der Aktualposition erfolgen. Ein Beispiel hierfür stellen Korrelationsverfahren bzw. Korrelationsrechnungen dar. Dabei ist die Zahl der benötigen Punkte abhängig von deren Lage und der beabsichtigten Genauigkeit der Messung. Im Regelfall werden aber, abgesehen von besonders günstigen Konstellationen, mindestens 3 oder 4 Punkte benötigt. Wird zusätzlich ein Winkel berücksichtigt, z.B. indem zusätzlich der Winkel gegenüber der Horizontalen erfasst wird, kann die Zahl der Punkte auf zwei reduziert werden.

Die jeweils tatsächlich benötigte Zahl an Punkten ist abhängig von der Lage der bekannten Punkte und ggf. möglicher Einschränkungen zur Reduzierung einer Mehrdeutigkeit. Bei drei Entfernungsmessungen zu den verschiedenen Referenzpunkten wird durch die drei bekannten Positionen eine Ebene definiert, an der die zu bestimmende Aktualposition gespiegelt werden kann. Als Lösung ergeben sich zwei mögliche Positionen, von denen aber meist eine Position aus Plausibilitätsgründen, z.B. weil sie unter der Erdoberfläche liegen würde, oder aufgrund einfacher weiterer Informationen ausgeschlossen werden, wie z.B. der Unterscheidung zwischen Nord und Süd, die auch durch einen einfachen Magnetkompass getroffen werden kann. Eine eindeutige Bestimmung mit drei bekannten Punkten ist möglich, wenn günstige geometrische Verhältnisse vorliegen. Dies ist beispielsweise der Fall, wenn die gesuchte Position auf einer Verbindungsgeraden zwischen zwei bekannten Punkten liegt.

Die bekannten Ansätze des Stands der Technik beruhen dabei meist auf der Anbringung von hinreichend vielen Strahlungsquellen, z.B. im Mikrowellenbereich, an genau bekannten Orten. Gegenüber diesen Sendern kann dann die absolute oder relative Lage bestimmt werden. Jedoch müssen hierfür viele Quellen positioniert und eingemessen werden, was eine hohen Geräte- und Handhabungsaufwand bedingt.

Andere Ansätze für lokale Positionierungssysteme beruhen auf passiven Punkten bekannter Position. So ist beispielsweise aus der PCT/EP2004/010571 ein System zur Bestimmung der Aktualposition eines Messgerätes bekannt, bei dem mindestens zwei in einem mit einem Laserstrahl abgetasteten Raumsegment gelegene Referenzpunkte erfasst und hinsichtlich ihrer Entfernung und ihrem Neigungswinkel vermessen werden. Aus den bekannten Positionen dieser detektierbar gestalteten Referenzpunkte und den zugeordneten Entfernungen und Neigungswinkel kann die Aktualposition des Messgerätes abgeleitet werden. Das Erfassen, Verfolgen und Vermessen der Referenzpunkte wird durch das Messgerät automatisiert vorgenommen, wobei das Messgerät und den Referenzpunkten zugeordnete, speziell ausgebildete Elemente ein lokales Positionierungs- und/oder Orientierungsmesssystem bilden. Bei diesem System müssen jedoch die Referenzpunkte aktiv mit einem Laserstrahl abgetastet und beleuchtet werden, so dass die Empfangskomponente im Messgerät sehr komplex ausgelegt werden muss.

Bekannt ist auch eine Vorrichtung aus der US 6,381,006 mit 3 Referenzstationen, welche aufgefächerte Laserstrahlung emittieren. Das System wird vom Ziel- oder Lotstock her bedient. Die Raumkoordinaten werden durch die 3 emittierten Lichtfächer definiert. Am handgetragenen Ziel- oder Lotstock befinden sich 3 Richtungssensoren, welche anhand der Lichtfächer die Lage des Ziel- oder Lotstocks im Raum vermessen. Die Position am Zielpunkt ist daher bestimmt. Um schwer zugängliche Messpunkte ebenfalls vermessen oder abstecken zu können, ist der Ziel- oder Lotstock zudem mit einem reflektorlosen Distanzmesser ausgerüstet. Die Vorrichtung hat den Nachteil, dass gleichzeitig zu 3 Referenzstationen, die in der Regel auf Augenhöhe plaziert werden müssen, das Erfordernis einer Sichtverbindung besteht. Im Baubereich oder auf befahrenen Baustellen ist diese Voraussetzung kaum erfüllt. Zudem gestaltet sich die technische Ausgestaltung der Referenzstationen komplex, wobei der Aufwand durch das Erfordernis einer Mehrzahl solcher Stationen nochmals erhöht wird.

Ein weiteres räumliches Positioniersystem mit ebenfalls rotierenden Lichtfächern ist aus den Schriften US 6,545,751 und US 6,646,732 bekannt. Die dort beschriebene 3D-Koordinatenbestimmung einer handgetragenen Zieleinheit basiert auf Zeit- oder Intervallmessung von jeweils mindestens 2 von einer Fixstation emittierten Lichtfächern. Diese Vorrichtungen haben ebenfalls den Nachteil, dass zwischen der handgetragenen Zieleinheit und den mindestens 2 Referenzstationen eine Sichtverbindung bestehen muss. Auch bei diesem Ansatz ist eine hoher Aufwand und eine hohe Komplexität erforderlich.

Alle Lösungen mit rotierenden Lichtfächern haben zudem den Nachteil des störenden Vibrationseinflusses, erzeugt durch die sich drehenden Module.

Eine Aufgabe der vorliegenden Erfindung besteht darin, ein vereinfachtes Verfahren und eine Vorrichtung bzw. ein System verringerter Komplexität bereitzustellen, das eine Bestimmung der Aktualposition sowie der Orientierung eines handhaltbaren Messgerätes selbst in stark durchschnittenem Gelände oder in Innenräumen ermöglicht.

Eine weitere Aufgabe besteht darin, die Handhabung bei der Einrichtung eines solchen Systems zu vereinfachen.

Diese Aufgaben werden durch die Gegenstände des Anspruchs 1 bzw. 16 oder der abhängigen Ansprüche gelöst bzw. die Lösungen weitergebildet.

Die Erfindung betrifft ein Verfahren zur Bestimmung einer Position und/oder einer Orientierung einer Empfängereinheit, einen zur Durchführung des Verfahrens geeigneten Strahlungsprojektor bzw. eine Empfängereinheit, ein Computerprogrammprodukt sowie das Gesamtsystem ein System zur Bestimmung einer Position und/oder einer Orientierung.

Der erfindungsgemässe Ansatz beruht darauf, die direkte Positionierung von Strahlungsquellen oder durch solche Quellen beleuchtbaren Objekten durch eine Projektion von Referenzpunkten zu ersetzen. Hierfür werden von einer oder mehreren Projektionseinheiten eine Menge von detektierbaren Strahlungs- bzw. Lichtflecken erzeugt, die von einer Empfangseinheit erfasst und ausgewertet werden. Dabei können sowohl relative als auch absolute Positionierungen bzw. Orientierungsbestimmungen durchgeführt werden.

Der zu vermessende Raum wird mit einer Multisendereinheit oder einem multiplen Laserprojektor mit detektierbarer Strahlung durchsetzt. Die Multisendereinheit wirkt als Referenzstation und stellt eine Art Laserprojektor dar. Die Anzahl der emittierten Laserstrahlen sind dabei wenigstens 3, typischerweise sind jedoch 4 Lasereinheiten bzw.

Projektionen von Referenzpunkten vorhanden. In Analogie zu globalen Positionierungssystemen muss für die Empfängereinheit stets eine durch die existenten Zwangs- und Umweltbedingungen sowie die gewünschte Messgenauigkeit vorgegebene Zahl von erfassbaren Referenzpunkten vorhanden sein. Je nach Geometrie, abzudeckender Fläche und Umweltbedingungen, wie z.B. Hindernissen, kann die Gesamtmenge der zu projizierenden Referenzpunkte auch kleiner als 3 oder aber auch deutlich grösser als 4 sein. Dabei kann die Projektion durch eine einzige Multisendereinheit oder aber auch durch mehrere solche Einheiten erzeugt werden, wobei die Einheiten untereinander in Kommunikationsverbindung stehen können. Gleichfalls kann auch die Strahlung einer gemeinsamen Quelle übertragen und über eine Relaisstation projiziert werden.

Das zu projizierende Licht wird dabei moduliert, insbesondere intensitäts-, phasen- oder polarisationsmoduliert, wobei die Strahlung dabei im sichtbaren als auch im infraroten Wellenlängenbereich oder auch in noch längerwelligen Bereichen liegen kann. Die vorzugsweise kollimierten und emittierten Lichtstrahlen treffen dabei auf fixstehende Oberflächen und werden von diesen in den Raum, insbesondere in den zu vermessenden Bereich reflektiert. Die Reflexion kann dabei diffus oder gerichtet erfolgen, wobei die reflektierenden Flächen natürliche Oberflächen, wie z.B. Wände eines zu vermessenden Raumes, spiegelnde Flächen, wie z.B. Fensterfronten oder aber auch spezielle, künstlich als Satelliten wirkende Reflexionsmarken oder spezielle Reflexmaterialien sein können, die an geeigneten Stellen aufgestellt oder montiert werden können. Auch sind Marken mit transmittiver oder kombinierter Wirkung realisierbar.

Die Lasereinheiten bzw. Strahlungsprojektoren emittieren modulierte Strahlung, wobei beispielsweise das modulierte Licht der 3 bis 4 Sendeeinheiten phasenstarr miteinander gekoppelt ist. Die damit verbundene Information ist derart ausgebildet, dass aus der Laufzeit oder Phasenlage der Modulation eine mm-genaue oder sogar sub-mm-genaue Distanzinformation ermittelt werden kann.

Mit einer vorzugsweise handgetragenen Empfängereinheit wird das an den Satelliten, Referenzpunkten oder Wänden gestreute Laserlicht, erzeugt durch diese 3, typisch 4 Sendeeinheiten, detektiert. Aus den relativen Laufzeiten oder Phasenlagen der Modulationsformen kann die Position des Detektors errechnet werden. Die Referenzpunkte werden dabei derart plaziert, dass sie von dem zu vermessenden Raumbereich eingesehen werden können. Durch die Projektion wird es auch möglich, die Referenzpunkte an erhöhten Stellen zu erzeugen, so dass eine gute Erfassbarkeit gewährleistet ist. Die Projektion kann dabei auf ohnehin vorhandene, geeignete Strukturen, wie z.B. Decken von Innenräumen, oder aber auch auf spezielle Objekte erfolgen. Solche Objekte sind beispielsweise auf natürliche Oberflächen klebbare Kugelsphären oder Reflextafeln, die vermittels eines ausfahrbaren Gestänges einsehbar aufgestellt werden können.

Die Positions- oder Orientierungsbestimmung erfolgt entweder relativ zu einer ausgezeichneten und in ihrer Lage bekannten Nullage oder absolut. Für den ersten Ansatz wird zu Beginn des Verfahrens das Messgerät mit der Empfängereinheit am Ort der Nullage plaziert und die Strahlung der Referenzpunkte erfasst und vermessen. Sind die Koordinaten der Referenzpunkte bekannt, dies kann durch ein vorgängiges Einmessen erfolgt sein, so kann empfängerseitig direkt mit der relativen Positions- oder Orientierungsbestimmung begonnen werden. Dabei wird anhand der Veränderung von der Strahlung aufgeprägten bzw. modulierten Charakteristika die Ablage gegenüber der Nullage bestimmt.

Sind die Koordinaten der Referenzpunkte hingegen nicht bekannt, so kann im Sinne eines Rückwärtseinschnittverfahrens die Position der Referenzpunkte bestimmt werden. Dabei wird die handgetragene Empfängereinheit nach dem Ort der Nullage vorzugsweise an ein, zwei oder drei weiteren bekannten Orten plaziert, die zusammen mit der Nullage die Richtung und Länge der Einheitsvektoren des ein-, zwei- oder dreidimensionalen Koordinatensystems aufspannen.

Der Ansatz zur Absolutpositionierung bzw. -orientierung beruht somit auf der Kenntnis der Lage der erfassten Referenzpunkte, so dass diese vorgängig eingemessen oder an bezüglich ihrer Position bekannten Punkten plaziert werden müssen. Aus der Kenntnis der absoluten Position der Referenzpunkte, deren Abstände zum Laserprojektor und der empfangenen aufmodulierten Signale kann die Absolutposition bzw. -orientierung der Empfängereinheit abgeleitet werden.

Sowohl die Messung der absoluten als auch die relativen Lagebestimmung beinhalten die Analyse der von den Referenzpunkten stammenden Strahlung hinsichtlich einer Entfernungsinformation, wobei entweder die Entfernung selbst oder die Änderung einer Entfernung betrachtet wird. Hierbei kann grundsätzlich auf die bekannten Distanzmessverfahren wie Phasenmessung oder Laufzeitmessung zurückgegriffen werden.

Ein erster erfindungsgemässer Ansatz zur Signalverarbeitung der empfangenen Strahlung beruht auf dem Phasenmessprinzip, wobei das Prinzip dem GPS-Vermessungsverfahren ähnelt. Erfindungsgemäss wird jedoch im Gegensatz zur GPS-Methode nicht die Phase des einen Trägersignals sondern die der Intensitäts- oder Polarisationsmodulation des Laserlichts gemessen und im Sinne eines herkömmlichen Distanzmessers nach dem Phasenmessprinzip ausgewertet.

Um die verschiedenen Referenzpunkte bzw. Laserquellen identifizieren und auseinander halten zu können, kann beispielsweise jede Laserquelle mit einer eigenen Frequenz moduliert sein. Beispielsweise sind folgende Frequenzen zur Unterscheidung der einzelnen Sender sinnvoll: 33 MHz, 31 MHz, 29 MHz, 27 MHz. Das an der Empfängereinheit empfangene Signal kann dann nach Frequenzen aufgeteilt und deren Phasen einzeln bestimmt werden.

Ebenfalls realisierbar ist eine Unterscheidung der Signale nach den optischen Wellenlängen, aber auch durch eine zusätzliche Modulation, wie sie beispielsweise beim GPS-System mit dem C/A-Code in ähnlicher Weise verwendet wird.

Die Empfängereinheit misst dabei die Phase der von den Reflexionspunkten gestreuten Strahlung. Mittels eines Taktsignals, das durch einen quarzgenauen lokalen Oszillator als Zeitnormal erzeugt wird, erfolgt die Messung der Phase der den Sendeeinheiten zugeordneten Signale. Falls die Empfängereinheit mit einer Atomuhr versehen ist, so genügen bereits 3 modulierte Sendesignale, für den Fall eines weniger genauen Zeitnormals bei der Empfängereinheit werden wenigstens 4 modulierte Sendesignale benötigt, um eine Positionsbestimmung mit mm-Genauigkeit zu erreichen.

Auch kann das bei der Phasendistanzmessung gebräuchliche Heterodyn-Verfahren zur Frequenztransformation angewendet werden. Dadurch gelingt es die Phasenmessung an niederfrequenten Signalen mittels digitaler elektronischer Bausteine und Auswerteverfahren zu realisieren.

Nach den bekannten Verfahren der Signalauswertung von GPS-Systemen können die Absolutphasen (Ambiguity Resolution, Anzahl der Modulationswellenlängen), damit die Distanzen zu den Satelliten und schliesslich die Position (3 Koordinaten x,y,z) der Empfängereinheit bestimmt werden.

Zur Bestimmung der Absolutphasen (Ambiguity Resolution) kann auch ein komplexeres Modulationsverfahren des Laserlichts eingesetzt werden. Beispielsweise kann mittels einer Bimodulation die Anzahl der Modulationswellenlängen abgeleitet werden, bei welcher simultan zwei Frequenzen oder eine Frequenz mit Phasenumtastung dem Trägerlicht aufmoduliert werden.

Ein zweiter erfindungsgemässer Ansatz lässt sich nach dem Verfahren der gepulsten Laufzeitmessung realisieren. Dabei werden von der Laserkanone Lichtimpulse emittiert, die wiederum gegenseitig betreffend zeitlich verzögert und starr miteinander gekoppelt sind.

Durch die Wahl von niedrigen Pulsrepetitionsfrequenzen im Hz bis kHz-Bereich können der Eindeutigkeitsbereich und damit der Messbereich der Vorrichtung mehrere 100 m bis 1000 m betragen.

Die Identifikation der Referenz- bzw. Reflexionspunkte kann wiederum durch unterschiedliche Träger- oder Licht-Wellenlängen ermöglicht werden. Im einfachsten Fall können diese durch ein zeitliches Nacheinander der Lichtpulse maskiert sein.

Im Fall der zeitlichen Maskierung werden den einzelnen Laserquellen beziehungsweise Satelliten entsprechende Zeitintervalle zugeordnet. Einer der Impulse kann dabei zur Identifikation des Sequenzbeginns zusätzlich mit einem Codierungsmerkmal versehen sein. Beispielsweise wird dem letzten Puls eine längere Lichtpause angefügt bis sich die Impulsfolge beim ersten beginnend wiederholt.

Die Identifikation der einzelnen Laserquellen ist ebenfalls mittels einer fortlaufenden Erfassung und Analyse der Verzögerung der einzelnen Pulse als inkrementellem Verfahren möglich. Jedoch besitzt dieser Ansatz grundsätzliche Probleme bei einem Strahlunterbruch.

Gegenüber der Phasenmessung weist die Laufzeitmessung Vorteile auf, wie beispielsweise höhere Empfindlichkeit, höhere Messgeschwindigkeit, höhere Reichweite, insbesondere aber die höhere Robustheit gegenüber Umgebungslicht. Zudem ist ein Frequenzsynthesizer einfacher zu realisieren, da für alle Laserquellen eine einzige Pulsfrequenz ausreichend ist.

Eine Anbindung der relativen Referenzierung an ein raumgebundenes oder übergeordnetes Koordinatensystem kann durch verschiedene Ansätzen erreicht werden.
- Bei der Referenzierung zu einem bereits horizontierten Boden wird die handgetragene Empfängereinheit an 3 Stellen auf dem Boden plaziert und jeweils eine Messung ausgelöst. Dadurch ist die Horizontalebene bekannt und jede beliebige Höhe über dem Boden kann nun so mit der Empfängereinheit abgesteckt werden.
- Bei der Referenzierung zu einem auch im Azimut bestimmten Koordinatensystem kann ähnlich wie bei der Horizontalebenenübertragung vorgegangen werden. Dabei werden wiederum 3 Messpunkte in der horizontierten Ebene des Bodens aufgenommen, wobei 2 der Punkte in der azimutbestimmenden Richtung liegen. Diese Richtung kann beispielsweise die Kante zwischen Boden und einer Seitenwand sein.
- Darüber hinaus existieren weitere, dem Fachmann bekannte Methoden des Einrichtens. Ist beispielsweise nur der Abstand von einer Wand interessant, so kann die Lage der Seitenwand mittels einer 3-Punktmessung aufgenommen werden. Anschliessend ist die Empfängereinheit in der Lage, den Abstand zur Wand laufend zu bestimmen.
- Eine weitere Methode des Einrichtens kann mittels geeigneten Zubehörs vorgenommen werden. Beispiele solcher Zubehöre sind Lotstock, Lotlaser, mit Neigungssensor bestückte Richtfernrohre, aber auch Kreuzvisiere oder Prismenkreuze für eine Referenzierung längs einer Linie zwischen 2 Punkten und deren Normalen.

Das erfindungsgemässe Verfahren und ein erfindungsgemässes System mit entsprechenden Empfängereinheiten und Strahlungsprojektoren werden nachfolgend anhand von in der Zeichnung schematisch dargestellten Ausführungsbeispielen rein beispielhaft näher beschrieben. Im einzelnen zeigen
- Fig.1: die Darstellung eines ersten Anwendungsbeispiels für das erfindungsgemässe Verfahren zur Positionsbestimmung für eine Baumaschine;
- Fig.2-3: die Darstellung eines zweiten Anwendungsbeispiels für das erfindungsgemässen Verfahren zur Positionsbestimmung für eine Baumaschine;
- Fig.4-6: die Darstellung eines dritten Anwendungsbeispiels für das erfindungsgemässen Verfahren zur Positionsbestimmung für ein handhaltbares Messgerät;
- Fig.7a-d: die Darstellung von Ausführungsbeispielen des erfindungsgemässen Strahlungsprojektors;
- Fig.8: die Darstellung der zeitlichen Signalverläufe für das erfindungsgemässe Verfahren nach dem Laufzeitmessprinzip;
- Fig.9: die Darstellung des erfindungsgemässen Verfahrens nach dem Phasenmessprinzip mit Messung und Bestimmung der Relativphasen;
- Fig.10: die Darstellung des erfindungsgemässen Verfahrens nach dem Phasenmessprinzip mit Messung der Absolutphasen;
- Fig.11: die Darstellung eines ersten Ausführungsbeispiels der erfindungsgemässen Empfängereinheit;
- Fig.12: die Darstellung eines zweiten Ausführungsbeispiels der erfindungsgemässen Empfängereinheit und
- Fig.13a-b: die Darstellung eines dritten Ausführungsbeispiels der erfindungsgemässen Empfängereinheit.

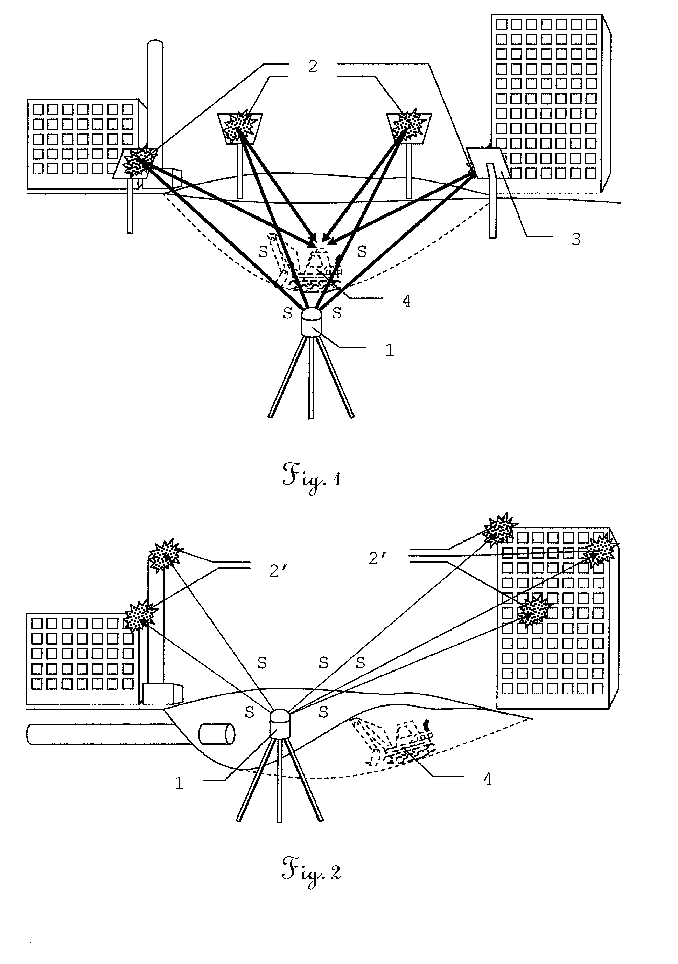

In Fig.1 wird exemplarisch ein erstes Anwendungsbeispiel für das erfindungsgemässe Verfahren zur Positionsbestimmung für eine Baumaschine 4 dargestellt. In diesem Beispiels befindet sich die Baumaschine 4 in einer Grube, so dass eine direkte Anzielung durch eine zentral aufgestellte Einheit, wie z.B. durch eine Totalstation, nicht möglich ist. Erfindungsgemäss wird durch einen Strahlungsprojektor 1 eine Menge von Referenzpunkten 2 projiziert, die wiederum von der Baumaschine 4 erfasst werden können. Hierzu wird elektromagnetische Strahlung S, vorzugsweise Laserlicht, auf von der Baumaschine 4 einsehbare Orte geführt. Um eine entsprechende Abdeckung des zu bearbeitenden Raumes zu erreichen, ist es unter Umständen vorteilhaft, spezielle Komponenten, wie z.B. die hier rein exemplarisch dargestellten Projektionstafeln 3, zu verwenden. Diese Projektionstafeln 3 können beispielsweise eine weisse oder spektral optimierte Fläche aufweisen, die an einem Stativ ausfahrbar angeordnet ist. Durch mehrere solcher Projektionstafeln 3 kann eine Abdeckung des Bearbeitungsbereichs bewirkt werden.

Fig.2-3 zeigen die Darstellung eines zweiten Anwendungsbeispiels für das erfindungsgemässen Verfahren zur Positionsbestimmung für eine Baumaschine 4. Wie in Fig.2 dargestellt können anstelle der Projektionstafeln des ersten Anwendungsbeispiels auch natürliche Oberflächen verwendet werden, wobei diese ggf. auch durch spezielle Behandlung, wie z.B. Glättung, oder das Aufbringen von Komponenten, wie z.B. spiegelnden oder reflektierenden Folien, reflektierender Farbe oder Kugelsphären, in ihrer Rückstrahlcharakteristik angepasst werden können. Der Strahlungsprojektor 1 projiziert nun die elektromagnetische Strahlung S auf vorhandene Strukturen und erzeugt somit eine Menge von Referenzpunkten 2'. Beispielsweise können Kugelsphären mit einem kollimierten Laserstrahl so ausgeleuchtet werden, dass ein grösserer Teil des Raumes durch die reflektierte Strahlung beleuchtet wird. Hierzu werden Strahldurchmesser und Kugeldurchmesser aufeinander abgestimmt. Naturgemäss können jedoch auch die speziellen Komponenten, wie z.B. die Projektionstafeln der Fig.1, und natürliche Strukturen gemeinsam verwendet werden.

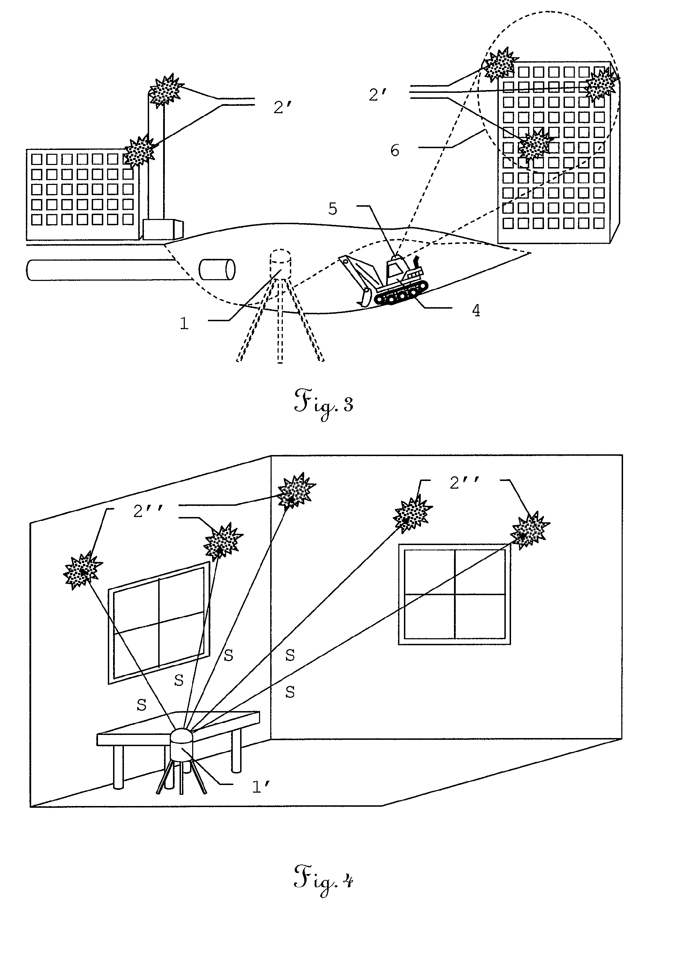

Fig.3 erläutert die Lagebestimmung der Baumaschine 4 anhand der projizierten Referenzpunkte 2'. Von der Baumaschine 4 werden die in den Erfassungsbereich 6 einer Empfängereinheit 5 fallenden Referenzpunkte 2' der Referenzpunktmenge erfasst. Dabei ist die Zahl der zur Bestimmung der Lage, also von Ort und/oder Orientierung, benötigten Referenzpunkte 2' abhängig von der gewünschten Genauigkeit sowie von möglichen Einschränkungen der Freiheitsgrade durch vorgegebene Informationen oder Zwangsbedingungen, z.B. der Bewegung auf einer horizontierten Fläche ohne Unebenheiten. Im allgemeinen werden jedoch vier Referenzpunkte 2' benötigt, um in einer zu einem globalen Positionierungssystem ähnlichen Weise, die Lage der Empfängereinheit 5 und damit der Baumaschine 4 zu bestimmen.

Fig.4-6 beinhalten die Darstellung eines dritten Anwendungsbeispiels für das erfindungsgemässe Verfahren zur Positionsbestimmung für ein handhaltbares Messgerät im Inneren eines Gebäudes. Wie in Fig.4 dargestellt, wird in einem Raum im Inneren eines Gebäudes ein Strahlungsprojektor 1' so aufgestellt, dass dieser mit der von ihm generierten Strahlung S eine Menge aus mehreren Referenzpunkten 2" an die Wand zu projizieren vermag.

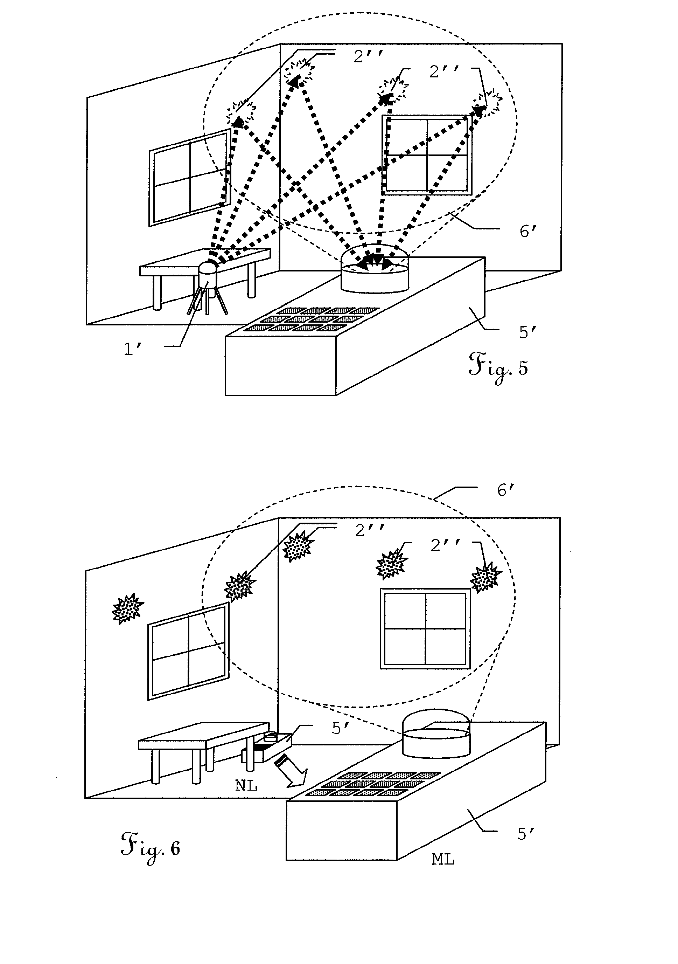

Eine Teilmenge dieser Referenzpunkte 2'' wird vom Erfassungsbereich 6' einer Empfängereinheit 5' erfasst, so dass, wie in Fig.5 abgebildet, eine Verknüpfung von Strahlungsprojektor 1' und Empfängereinheit 5' über die von der Strahlung zurückgelegten Strecken erfolgt. Sind die Koordinaten von Strahlungsprojektor und Referenzpunkten bekannt, so kann aus der Kenntnis dieser Strecken oder der Streckenabschnitten von Referenzpunkt 2'' zur Empfängereinheit 5' grundsätzlich die Lage der Empfängereinheit 5' abgeleitet werden. Die Koordinaten von Strahlungsprojektor und Referenzpunkten können beispielsweise als Bestandteil des Einrichtprozesses mittels eines Theodoliten bestimmt werden.

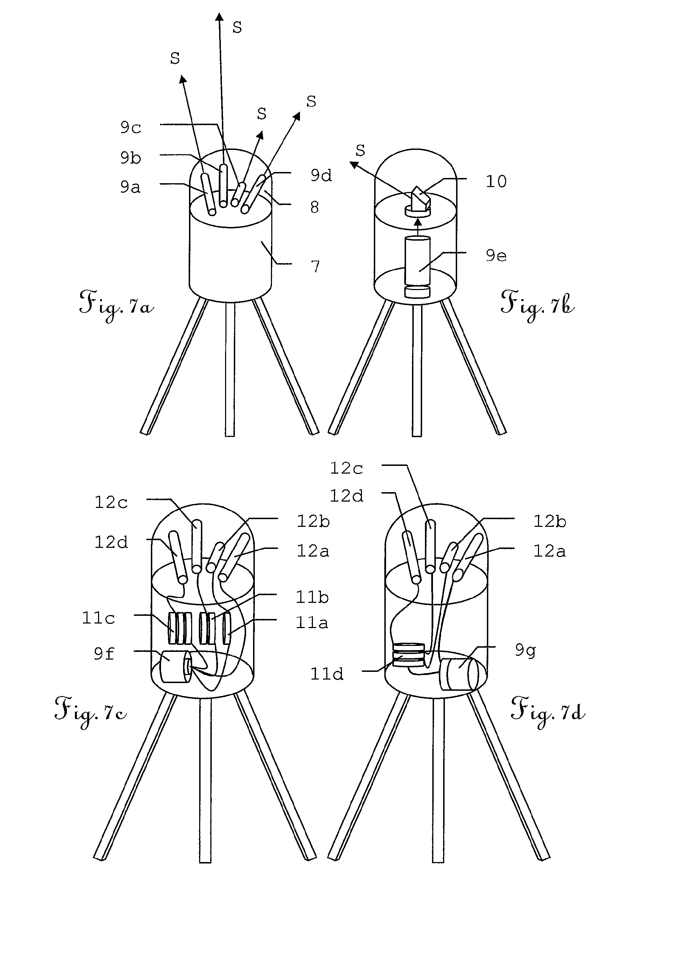

Erfolgt eine Bestimmung der relativen Position bzw. Orientierung der Empfängereinheit 5', so wird zu Beginn des Verfahrens, wie in Fig.6 dargestellt, die Empfängereinheit vorgängig in einer bekannten Nullage NL positioniert. In dieser Nullage NL erfolgt eine initiale Messung zu den Referenzpunkten 2". Nach erfolgter Initialmessung erfolgt die Durchführung der eigentlichen Messaufgaben, wobei die Empfängereinheit 5' in die jeweilige Messlage ML bewegt wird. Bei einer relativen Lagebestimmung verfolgt die Empfängereinheit 5' die Veränderung von der Strahlung aufgeprägten Signalen in Bezug auf die Charakteristik dieser Signale in der Nullage NL.

Sind Koordinaten von Strahlungsprojektor und Referenzpunkten nicht bekannt, so bedarf das Verfahren eines Kalibrierkörpers, welche die Koordinaten im zu vermessenden Raum festlegt. Im einfachsten Fall kann als Kalibrierkörper eine definierte, d.h. bemasste oder vermessene, Grösse, z.B. ein Meterstab, herangezogen werden, indem die Empfängereinheit 5' die von der Strahlung zurückgelegten Strecken wenigstens an den beiden Endpunkten misst. Die Nullage NL der relativen Position der Empfängereinheit 5' ist dann beispielsweise durch das erste Ende des Meterstabs, die Koordinatenrichtung und Einheitslänge durch das zweite Ende gegeben. Für beliebige Positionierungen im Raum ist aber die Kalibrierung mit drei definierten Grössen in drei orthogonalen Richtungen vorteilhaft, so dass hierdurch ein Kalibrierkörper definiert wird.

Zur Definition der Einheitslängen kann auch eine geräteinterne Vorrichtung verwendet werden. So kann beispielsweise durch einen optischen Sensor oder einen Rollkörper eine Bewegung relativ zu einer Oberfläche registriert und vermessen werden. Aus der gemessenen Entfernung relativ zur Oberfläche und der Veränderung der zugeordneten Messungen zu den Referenzpunkten 2" folgt dann eine Kalibrierung der Bewegung der Empfängereinheit 5'.

Die Fig.7a-d zeigen Darstellungen von Ausführungsbeispielen des erfindungsgemässen Strahlungsprojektors.

In Fig.7a wird ein erstes Ausführungsbeispiel des erfindungsgemässen Strahlungsprojektors abgebildet, wobei der Projektorkörper 7 eine strahlungsdurchlässige Haube 8 aufweist, innerhalb derer vier Strahlungsquellen 9a-d einzeln verstellbar angeordnet sind. Die von diesen Strahlungsquellen 9a-d, beispielsweise Halbleiterlasern, erzeugte Strahlung S kann zur Projektion von Referenzpunkten auf geeignete Objekte manuell oder automatisch ausgerichtet werden.

Fig.7b zeigt ein zweites Ausführungsbeispiel des erfindungsgemässen Strahlungsprojektors mit einem Element 10 zur scannenden Strahlführung als Projektionsmittel. Die Strahlung S der Strahlungsquelle 9e wird nun in Zeitabhängigkeit auf verschiedenen Orte zur Erzeugung der Referenzpunktmenge abgebildet. Dabei kann die abtastende oder scannende Bewegung sowohl durch klassische mechanische Komponenten aber auch beispielsweise in mikroelektromechanischer (MEMS)-Technologie realisiert werden.

Um die Koordinaten der Referenzpunkte und die Distanzen zwischen Strahlungsprojektor und Referenzpunkten in einfacher Weise zu bestimmen, kann der Strahlungsprojektor selbst mit einer Distanz- und Winkelmesseinrichtung ausgerüstet sein. Damit vereinfacht sich das Einrichten des Systems, welches für eine absolute Positionsbestimmung notwendig ist. Die Einmessung des Positioniersystems kann aber auch durch heranziehen eines Vermessungsinstruments wie beispielsweise eines Theodoliten durchgeführt werden.

Ein drittes Ausführungsbeispiel wird in Fig.7c erläutert. Als Strahlquelle 9f wird ein gepulster Mikrochiplaser verwendet, wobei dessen Strahlung über mehrere Verzögerungsstrecken 11a-c geführt wird. Die Ausrichtung der zu emittierenden Strahlung und deren Projektion erfolgt über mehrere Richtkomponenten 12a-d als Projektionsmittel. Geeignete Mikrochiplaser emittieren über 1 kW als Pulsspitzenleistung bei einer Pulsdauer von 1 ns. Das erzeugte Laserlicht wird dann in vier parallele Singlemode-Fasern von beispielsweise 1 m, 101 m, 201 m und 301 m Länge als Verzögerungsstrecken eingekoppelt, so dass ein gegenseitiger zeitlicher Abstand von ca. 500 ns resultiert, was einer räumlichen Separation von ca. 150 m entspricht. Das über die Fasern geführte Licht wird dann entweder durch ein scannendes Element oder die Richtkomponenten 12a-d als Projektionsmittel kollimiert und die Referenzpunkte werden projiziert. Durch die gemeinsame Quelle erfolgt eine Kopplung der vier emittierten Signale, wobei eine identische Signalcharakteristik gewährleistet ist. Als Repetitionsrate des Mikrochiplasers kann z.B. 10 kHz gewählt werden, wobei eine gewisse Stabilisierung über die Pumpleistung oder eine Temperaturregelung erfolgt.

Fig.7d zeigt ein viertes Ausführungsbeispiel, bei dem in zu Fig.7c ähnlicher Weise eine Verzögerung erfolgt. Hierbei wird das Licht einer Strahlquelle 9g zur Erzeugung verschiedener Kanäle in eine gemeinsame Verzögerungsstrecke 11d eingekoppelt, aus der durch optische Teiler oder Koppler nach entsprechenden Distanzen jeweils ein Teil der Strahlung ausgekoppelt und über eine zugeordnete Einheit der Richtkomponenten 12a-d als Projektionsmittel projiziert wird.

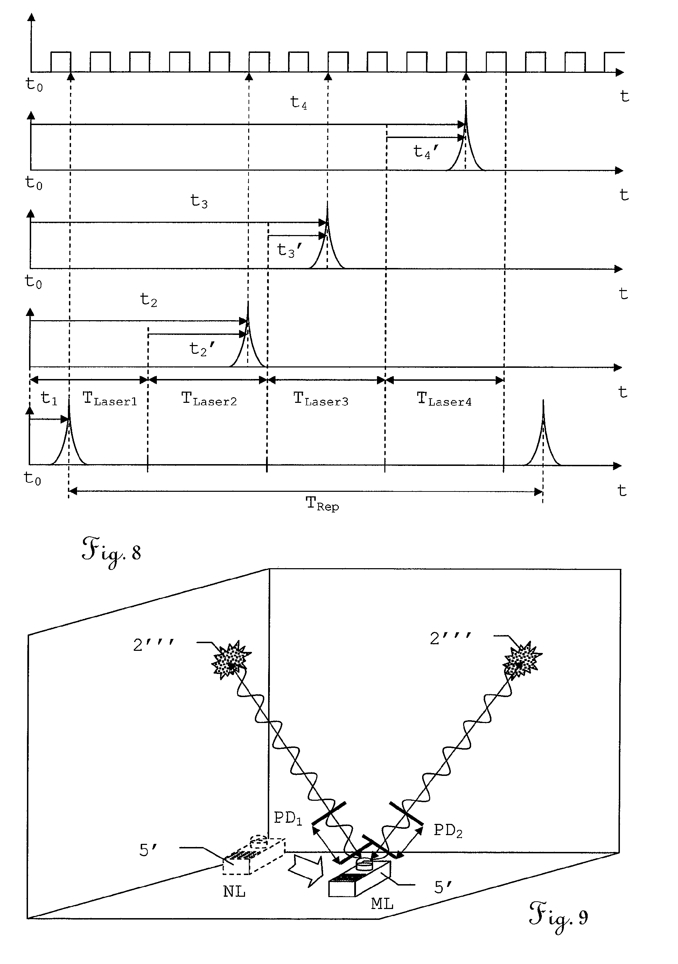

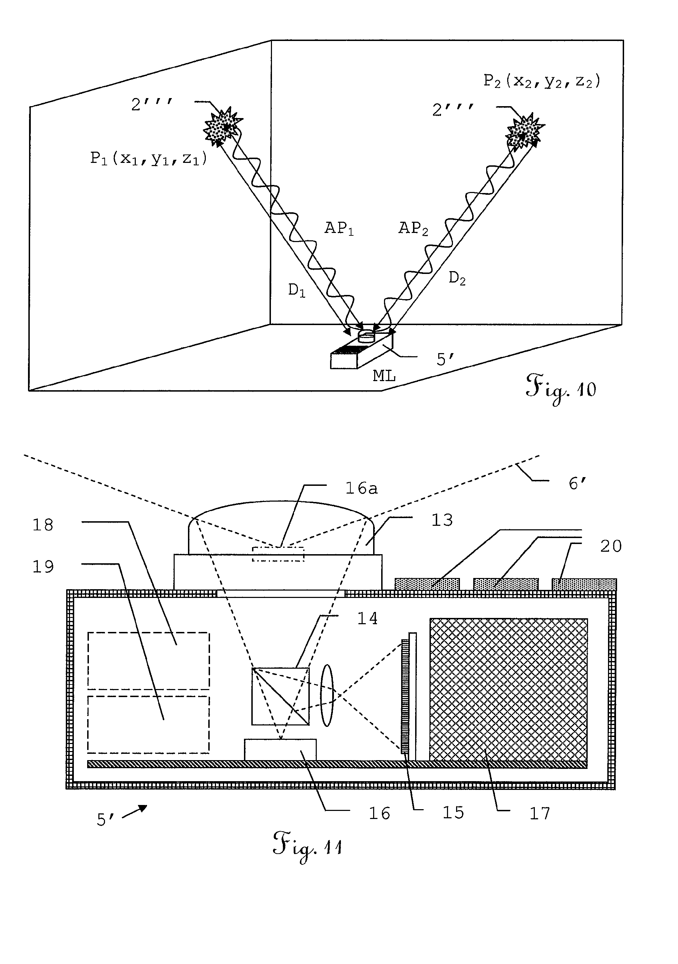

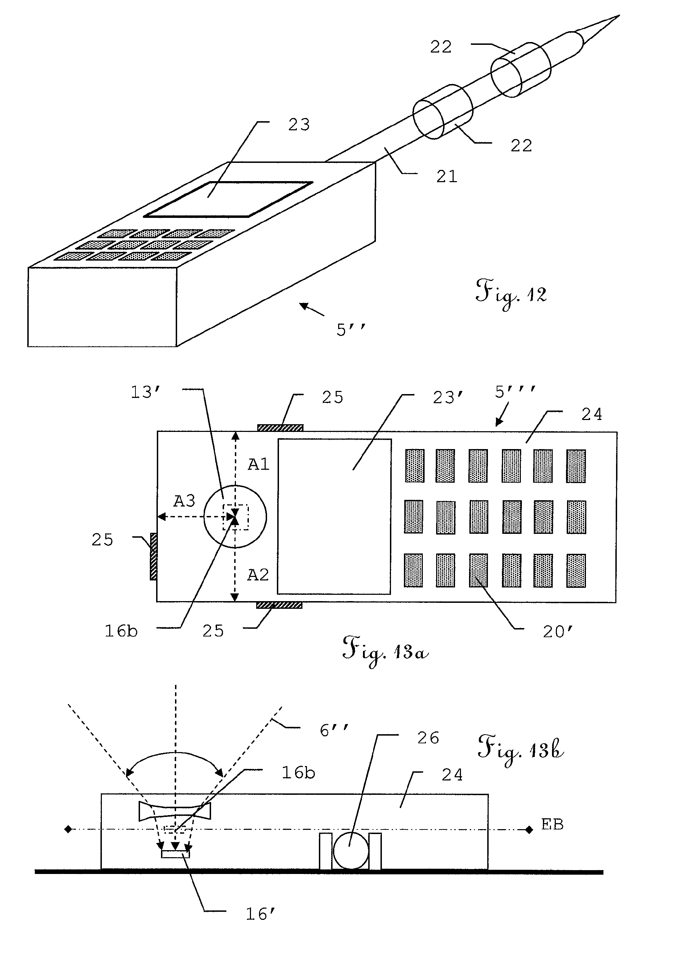

In Fig.8 erfolgt die Darstellung der zeitlichen Signalverläufe für das erfindungsgemässe Verfahren nach dem Laufzeitmessprinzip. Aufgetragen sind jeweils Grössen in Zeitabhängigkeit. An oberster Stelle ist das ppm-genaue Zeitnormal der Empfängereinheit als Rechtecksignal dargestellt. Darunter werden die empfangenen Signale von vier Referenzpunkten abgebildet. Die als Laserpulse emittierten Signale weisen eine Pulsrepetitionszeit T_{Rep} auf, wobei sender- und empfängerseitig für jeden Laser ein zeitliches Fenster - z.B. durch die Verwendung von Verzögerungsstrecken - existiert. Die Dauer der Zeitfenster T_{Laser1}-T_{Laser4} ist dabei gleich. Bezogen auf den zeitlichen Nullpunkt t₀ empfängt die Empfängereinheit vier Pulse zu den Zeitpunkten t₁-t₄, denen innerhalb des jeweiligen Zeitfensters eine Laufzeit t₁'-t₄' entspricht. Diese zeitlichen Signalverläufe werden von der Empfängereinheit in der Nullage aufgenommen und die Veränderung, d.h. die Änderung der Zeiten t₁-t₄ bzw. Laufzeiten t₁'-t₄', gegenüber diesem Profil fortlaufend zur Lagebestimmung ausgewertet. Hierbei ist jeder Laufzeit t₁'-t₄' eine entsprechende Distanz zuordenbar. Die Veränderung der Distanzen ist mit einer Ortsveränderung der Empfängereinheit korreliert, so dass eine Positions- bzw. Orientierungsveränderung abgeleitet werden kann. Dabei kann sowohl die vollständige Distanz zum Referenzpunkt bzw. zur Strahlungsquelle als auch nur die Veränderung der Distanz ausgewertet werden.

Ein alternativ mögliches erfindungsgemässes Verfahren nach dem Phasenmessprinzip mit Messung der Relativphasen wird in Fig.9 dargestellt. Wiederum wird für eine Empfängereinheit 5' am Ort einer Messlage die Veränderung der Signalcharakteristik relativ zu einer Nullage NL bestimmt und ausgewertet. Jedoch erfolgt die Betrachtung einer Phasendifferenz PD₁ bzw. PD₂, die aus Anschaulichkeitsgründen rein exemplarisch nur für zwei Referenzpunkte 2''' dargestellt werden. Wachsen die Phasendifferenzen über einen vollen Zyklus, d.h. 2π, so müssen diese mitgezählt werden, sonst geht der Relativbezug zur Nullage NL verloren.

Fig.10 zeigt die Darstellung des erfindungsgemässen Verfahrens nach dem Phasenmessprinzip mit Bestimmung der Absolutphasen. Gemessen werden immer nur Phasenanschnitte, d.h. Relativphasen von 0 bis 2π. Daraus berechnet sich über die Auflösung der Phasenmehrdeutigkeit die Absolutphase. In zur Fig.9 ähnlicher weise wird nun statt der relativen die Absolutphase AP₁ bzw. AP₂ zu den Referenzpunkten 2''' bestimmt. Dies beinhaltet eine aus dem Bereich der globalen Positionierungssysteme bekannte Auflösung der Phasenmehrdeutigkeit. Hiermit ist dann auch die Entfernung zum Referenzpunkt 2''' bzw. zur Strahlungsquelle definiert. Neben der Absolutphasenmessung kann auch eine Bestimmung der absoluten Position ermöglicht werden, wenn neben dem Standort der Strahlungsquelle auch die Lage P₁(x₁,y₁,z₁) bzw. P₂(x₂,y₂,z₂) der Referenzpunkte 2''' bekannt ist, so dass die den Distanzen D₁ und D₂ zugeordneten Richtungen bestimmt werden können. Dieser Ansatz entspricht dann weitgehend der Positionsbestimmung mit Satelliten, wobei die Referenzpunkte quasi als künstliche Satelliten bzw. Sterne dienen. Damit kann auch ohne vorhergehende Messung aus einer Nullage eine absolute Lagebestimmung erfolgen, jedoch erfordert dieser Ansatz die Kenntnis der Lage P₁(x₁,y₁,z₁) bzw. P₂(x₂, y₂,z₂) der Referenzpunkte, was entweder deren Projektion an bekannten Orten oder eine vorhergehende Vermessung der Projektionen erfordert.

Die Realisierung einer ersten erfindungsgemässen Empfängereinheit 5' wird in Fig.11 gezeigt. Durch ein Weitwinkelobjektiv 13, z.B. mit ca. 120° Öffnungswinkel, mit einem Erfassungsbereich 6' wird die Strahlung von Referenzpunkten erfasst und über einen Strahlteiler 14 mit einer nachgelagerten Optik auf eine bildaufnehmende Komponente 15 und einen Detektor 16 zum Empfang der Strahlung und zur Signalverarbeitung geführt. Deren Signale werden in einer Auswerteeinheit 17 verarbeitet und hinsichtlich der Positions- und Orientierungsinformation analysiert. Der empfängerseitige Bezugspunkt 16a, von welchem die 3D-Lage primär bestimmt wird, ist die virtuelle Bildposition, welche hier gestrichelt dargestellt ist.

Zur Steuerung und Bedienung des Gerätes können gattungsgemäss übliche Komponenten, wie z.B. eine Eingabetastatur 20, Verwendung finden. Zudem können ergänzend ein oder mehrere, z.B. auch biaxiale Neigungsmesser 18 oder ein hochpräzises Zeitnormal 19, z.B. eine Atomuhr, integriert sein. Hierdurch kann die Zahl der zur Lagebestimmung benötigten Referenzpunkte verringert oder Redundanzen geschaffen werden.

In diesem Ausführungsbeispiel mit Laufzeitmeßprinzip empfängt der Detektor 16 das gepulste Licht der verschiedenen Referenzpunkte nacheinander, d.h. sequentiell, wobei die Trennung durch die Gestaltung der Zeitfenster möglich ist. Alternativ können jedoch auch andere Trennverfahren, z.B. chromatischer Natur oder durch Codierung, verwendet werden. Das Signal wird dann verstärkt und digitalisiert, wobei nach dem ersten empfangenen Laserpuls eine Synchronisierung des Zeitnormals und die Erzeugung von Zeitfenstern erfolgen. Die Verzögerungen der empfangenen Lasersignale werden dann hinsichtlich ihrer relativen Lage im jeweiligen Zeitfenster analysiert. Es erfolgt ein Vergleich mit der Charakteristik am Ort der Nullage, so dass eine relative räumliche Verschiebung abgeleitet wird. Wird das Zeitnormal durch eine hochpräzise Uhr, so kann mit nur drei empfangenen Referenzpunkten gearbeitet werden. Gleichermassen können auch Neigungsmesser oder zusätzliche Richtungsinformationen, z.B. durch die bildaufnehmende Komponente 15, integriert werden. Zudem erlaubt die bildaufnehmende Komponente 15 die Ableitung von Orientierungsinformationen, wenn die Veränderung der Lage der Referenzpunkte gegenüber deren Position am Ort der Nullage bestimmt wird.

In der einfachsten Variante kann jedoch auf eine solche bildaufnehmende Komponente 15 verzichtet werden, wenn ständig die Strahlung von mindestens vier Referenzpunkten empfangen werden kann. Zur Unterdrückung von störendem Hintergrund- bzw. Umgebungslicht kann vor dem Detektor ein schmalbandiger Filter, z.B. ein Interferenzfilter, angeordnet werden. Sehr schmale Interferenzfilter mit hohem Unterdrückungsgrad sind bei Mikrochiplaser oder wellenlängen-stabilisierten Laserdioden nutzbar.

Fig.12 zeigt die Darstellung einer zweiten erfindungsgemässen Empfängereinheit 5'' mit einer Tasternadel 21 auf der zwei Eintrittsöffnungen 22 für die Strahlung bzw. zwei Detektoren zur Distanzbestimmung angeordnet sind. Durch die Duplizierung der Positionsbestimmung kann auch die Orientierung der Empfängereinheit 5'' im Raum bestimmt werden, so dass auf bildaufnehmende Komponenten verzichtet werden kann. Mit einer solchen Empfängereinheit sind insbesondere Messungen zu verborgenen Punkte im Sinne einer "Hidden Point"-Problematik möglich. Der empfängerseitige Bezugspunkt, von welchem die 3D-Lage bestimmt wird, ist hier exemplarisch die Spitze der Tasternadel 21. Zur Bedienung und Steuerung ist bei dieser zweiten erfindungsgemässen Empfängereinheit 5'' eine visuelle Anzeige 23, z.B. ein FlüssigkristallDisplay, auf dem Gehäuse angeordnet.

Fig.13a-b zeigt die Darstellung einer dritten erfindungsgemässen Empfängereinheit 5"', die speziell zur Anlage an zu messenden Flächen oder Punkten ausgebildet ist. Die Funktionalität der Empfängereinheit 5''' kann wiederum über eine Eingabetastatur 20' und eine visuelle Anzeige 23' gesteuert werden. Die Referenzpunkte können durch ein Weitwinkelobjektiv 13' mit einem Erfassungsbereich 6" erfasst werden. Dabei liegt der empfängerseitige Bezugspunkt 16b des Detektors 16', wie in Fig.13b gezeigt, in einer Ebene EB innerhalb des Gehäuses 24. Um nun Messungen durchführen zu können, bei denen eine Fläche oder ein Anlagepunkt an ein Objekt den Bezugspunkt darstellen, verfügt die Empfängereinheit 5''' über definierte Abstände A1-A3 vom empfängerseitigen Bezugspunkt 16b zu den Seitenflächen des Gehäuses 24. Die Verknüpfung von Messungen zum empfängerseitigen Bezugspunkt 16b kann manuell über eine Steuerung mittels Eingabetastatur 20' oder aber durch Drucktasten 25 gewährleistet werden. Bei Anlage an ein zu vermessendes Objekt wird dabei die jeweilige Drucktaste 25 eingedrückt und somit der zugeordnete definierte Abstand A1, A2 oder A3 ausgewählt und in der Auswertung mit dem empfängerseitigen Bezugspunkt 16b verknüpft. Das Gehäuse 24 der Empfängereinheit 5''' weist eine Kugel als bewegungssensitive Kalibrierkomponente 26 auf, deren Abrollverhalten hinsichtlich der zurückgelegten Distanz vermessen wird. Somit ist auch ohne externe Referenzgrösse, wie z.B. einen Meterstock, eine geräteinterne Kalibrierung der Bewegung möglich. Um eine Bewegung in drei orthogonalen Richtungen zu definieren kann dann die Empfängereinheit 5''' in zwei senkrechten Bewegungen über den Boden eines Raumes und in einer Bewegung über eine Seitenwand des Raumes geführt werden. Nach der hierdurch ermöglichten Kalibrierung kann dann eine Positions- und/oder Orientierungsbestimmung ohne unmittelbaren Kontakt zur Oberfläche vorgenommen werden. Neben kontaktgesteuerten können auch berührungslos messende Systeme, wie z.B. bei einer optischen Computermaus, als Kalibrierkomponenten 26 verwendet werden.

In den Figuren sind die Verfahrensschritte, Gebäude und verwendeten Instrumente rein schematisch dargestellt. Insbesondere können aus den Darstellungen keine Grössenverhältnisse oder Details der Bildverarbeitung bzw. Vermessung der Referenzpunkte entnommen werden. Die nur exemplarisch als Referenzpunkte dargestellten Punkte stehen stellvertretend auch für komplexere Strukturen bzw. die einen Punkt definierenden Elemente, wie z.B. Kugelsphären oder Reflexfolien.

Es versteht sich von selbst, dass das erfindungsgemässe System zur Lagebestimmung auch die gleichzeitige Benutzung von mehreren Empfängereinheiten zulässt.

## Patentansprüche

1. Verfahren zur Lagebestimmung einer Empfängereinheit (5,5',5",5"'), mit
- wenigstens einem Strahlungsprojektor (1,1'), insbesondere mit wenigstens einer Laserquelle (9a-g), zur Projektion wenigstens eines detektierbaren Referenzpunktes (2,2',2'',2''') einer Referenzpunktmenge,
wobei die Empfängereinheit (5, 5', 5'', 5''')zur Erfassung von Referenzpunkten (2,2',2",2"') der Referenzpunktmenge ausgebildet ist und
wobei die Referenzpunktmenge wenigstens drei, vorzugsweise vier Referenzpunkte (2,2',2'',2''') aufweist, und
mit den Schritten
- Erzeugen von modulierter, insbesondere intensitäts-, phasen- oder polarisationsmodulierter, elektromagnetischer Strahlung (S) zur Projektion der Referenzpunkte (2,2',2",2"'),
- Projizieren von wenigsten drei, vorzugsweise vier durch die Empfängereinheit (5,5',5" ,5" ') erfassbaren Referenzpunkten (2,2',2'',2'''),
- Erfassen der Strahlung (S) von wenigstens drei, vorzugsweise vier projizierten Referenzpunkten (2,2',2'',2''') der Referenzpunktmenge durch die Empfängereinheit (5,5',5'',5'''),
- Ableiten von Lageinformationen, insbesondere Positions- und/oder Orientierungsinformationen, für die Empfängereinheit (5,5',5'',5''') aus der erfassten Strahlung (S).

2. Verfahren nach Anspruch 1,
**dadurch gekennzeichnet, dass**
die Lageinformationen relativ zu einer Nullage (NL) bestimmt werden.

3. Verfahren nach Anspruch 2,
**dadurch gekennzeichnet, dass**
die Lageinformationen anhand
• einer Veränderung der relativen zeitlichen Lage eines der Strahlung (S) aufgeprägten Signals oder
• einer Phasenänderung der empfangenen Strahlung (S) abgeleitet wird.

4. Verfahren nach einem der vorangehenden Ansprüche,
**dadurch gekennzeichnet, dass**
die Strahlung (S) zur Projektion der Referenzpunkte (2,2',2",2"') mit phasenstarrer Kopplung emittiert wird.

5. Verfahren nach einem der vorangehenden Ansprüche,
**dadurch gekennzeichnet, dass**
die Strahlung (S) zur Projektion der Referenzpunkte (2,2',2'',2''') mit Pulsen definierter zeitlicher Beziehung emittiert wird, insbesondere für die einzelnen Referenzpunkte (2, 2', 2'', 2''') gegeneinander verzögert wird, vorzugsweise im Bereich von Hunderten Nanosekunden.

6. Verfahren nach einem der vorangehenden Ansprüche,
**dadurch gekennzeichnet, dass**
die Strahlung (S) für die einzelnen Referenzpunkte (2, 2', 2'', 2''') mit unterscheidbarer Charakteristik erzeugt werden, insbesondere durch
- Modulieren mit referenzpunktspezifischer Frequenz,
- Wählen einer referenzpunktspezifischen optischen Trägerwellenlänge,
- Aufmodulieren einer referenzpunktspezifischen Information.

7. Verfahren nach einem der vorangehenden Ansprüche,
**dadurch gekennzeichnet, dass**
die Strahlung (S) zur Projektion eines ausgezeichneten Referenzpunktes (2, 2', 2'', 2''') codiert oder unterscheidbar gestaltet wird, z.B. durch chromatische Kennzeichnung.

8. Verfahren nach einem der vorangehenden Ansprüche,
**dadurch gekennzeichnet, dass**
eine Entfernungsbestimmung zwischen der Empfängereinheit 5,5',5'') und den Referenzpunkten (2,2',2'',2''') nach dem Phasen- oder Laufzeitmessungsprinzip erfolgt, wobei die Phasenmessung die absolute oder relative Phase bestimmt.

9. Verfahren nach Anspruch 8,
**dadurch gekennzeichnet, dass**
zur Bestimmung der Absolutposition der Empfängereinheit (5,5',5'',5''') die Lageinformationen aus
• der Entfernungsbestimmung zwischen der Empfängereinheit (5,5',5'',5''') und den Referenzpunkten (2,2',2'',2''') und
• einer Kenntnis der Absolutposition der Referenzpunkte (2,2',2'',2''')
abgeleitet wird.

10. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 9, insbesondere wenn das Programm in einem Computer ausgeführt wird.

11. Strahlungsprojektor (1,1') zur Durchführung des Verfahrens nach einem der Ansprüche 1 bis 9,
mit wenigstens einer ersten Laserquelle (9a-g),
**dadurch gekennzeichnet, dass**
der Strahlungsprojektor so ausgebildet ist, dass wenigstens zwei detektierbaren Referenzpunkte (2, 2', 2'', 2'''), insbesondere unabhängig voneinander ausrichtbar, projizierbar sind.

12. Strahlungsprojektor (1,1') nach Anspruch 11,
**gekennzeichnet durch**
wenigstens eine zweite Laserquelle (9b-d), insbesondere
wobei die erste Laserquelle (9a)und die zweite Laserquelle (9b-d)unabhängig voneinander ausrichtbar sind.

13. Strahlungsprojektor (1,1') nach Anspruch 11 oder 12,
**gekennzeichnet durch**
Projektionsmittel, die so ausgebildet sind, dass die Strahlung (S) der ersten Laserquelle (9a-g) zur Projektion von wenigstens zwei Referenzpunkten (2, 2', 2'', 2''') ausrichtbar ist, insbesondere sequentiell ausrichtbar ist.

14. Strahlungsprojektor (1,1') nach Anspruch 13,
**dadurch gekennzeichnet, dass**
die Projektionsmittel ein Element (10) zur scannenden Strahlführung aufweisen.

15. Strahlungsprojektor (1,1') nach einem der Ansprüche 11 bis 14,
**dadurch gekennzeichnet, dass**
die Strahlung der ersten Laserquelle (9f-g), vorzugsweise einem Mikrochip-Laser, auf wenigstens zwei, insbesondere vier optische Verzögerungsstrecken (11a-d) aufgeteilt wird, insbesondere durch Singlemode-Fasern unterschiedlicher Länge.

16. Empfängereinheit (5,5',5'',5''') zur Durchführung des Verfahrens nach einem der Ansprüche 1 bis 9,
mit wenigstens einem Detektor (16,16') zum gleichzeitigen Empfang der Strahlung (S) von wenigstens drei Referenzpunkten (2, 2', 2'', 2'''),
**dadurch gekennzeichnet, dass**
der Detektor (16,16') und eine Auswerteeinheit (17) so ausgebildet und angeordnet sind, dass
• eine Veränderung der relativen zeitlichen Lage eines Signals oder
• einer Phasenänderung
für die Strahlung (S) der wenigstens drei Referenzpunkte (2, 2', 2'', 2''') ableitbar ist.

17. Empfängereinheit (5, 5', 5'', 5''') nach Anspruch 16,
**dadurch gekennzeichnet, dass**
die Empfängereinheit (5, 5', 5'', 5''') richtungssensitiv ausgebildet ist, so dass eine Richtungsbestimmung beim Empfang der Strahlung (S) der wenigstens drei Referenzpunkten (2, 2', 2'', 2''') erfolgt, insbesondere durch eine bildaufnehmende Komponente (15).

18. Empfängereinheit (5') nach Anspruch 16 oder 17,
**gekennzeichnet durch**
einen, insbesondere biaxialen, Neigungsmesser (18).

19. Empfängereinheit (5') nach einem der Ansprüche 16 bis 18,
**gekennzeichnet durch**
ein hochpräzises Zeitnormal (19), insbesondere eine Atomuhr.

20. Empfängereinheit (5"') nach einem der Ansprüche 16 bis 19,
**gekennzeichnet durch**
wenigstens ein Schaltelement (25) zur Berücksichtigung eines definierten Abstandes (A1,A2,A3) von einem empfängerseitigen Bezugspunkt (16b) des Detektors (16') zu einer Anlagefläche der Empfängereinheit (5"').

21. Empfängereinheit (5"') nach einem der Ansprüche 16 bis 20,
**gekennzeichnet durch**
eine bewegungssensitive Kalibrierkomponente (26), wobei **durch** die Kalibrierkomponente (26) eine **durch** die Bewegung der Empfängereinheit (5''') zurückgelegte Strecke bestimmbar ist.

22. System zur Bestimmung einer Position und/oder einer Orientierung mit wenigstens einem ersten Strahlungsprojektor (1,1') nach einem der Ansprüche 11 bis 15 und wenigstens einer Empfängereinheit (5,5',5'',5''') nach einem der Ansprüche 16 bis 21.

23. System nach Anspruch 22,
**gekennzeichnet durch**
wenigstens ein diffus oder gerichtet reflektierendes Referenzobjekt, insbesondere eine Kugel oder einen Kugelabschnitt.

24. System nach Anspruch 22 oder 23,
**gekennzeichnet durch**
wenigstens einen zweiten Strahlungsprojektor (1,1') nach einem der Ansprüche 11 bis 15, wobei der erste und der zweite Strahlungsprojektor (1,1') über eine, insbesondere drahtlose, Kommunikationsverbindung zur Synchronisation der Projektion der Referenzpunkte (2,2',2'',2''') verfügen.
